# EUROPEAN PATENT APPLICATION

(11) **EP 3 086 399 A1**
(43) Date of publication of application: **26.10.2016**
(21) Application number: 14872032.9
(22) Date of filing: 18.12.2014
(51) Int. Cl.: H01M 10/44, H02J 7/00

(54) **METHOD FOR REGENERATING NIMH BATTERIES**

(30) Priority: 18.12.2013 ES 201331851
(71) Applicant: Bluelife Battery S.L., 28041 Madrid (ES)
(72) Inventor: GOMEZ PEREZ, Rodrigo, E-28041 Madrid (ES); OMAÑA MARTIN, Alfredo, E-28041 Madrid (ES)
(74) Representative: Herrero & Asociados, S.L.
(86) International application number: PCT/ES2014/070936
(87) International publication number: WO 2015/092107

(57) **Abstract**

The present invention relates to a method for regenerating a Ni-Mh battery with a plurality of modules. The method comprises the steps of: performing, by at least one discharger, a first discharge of each of the battery modules at a first discharge rate until each module reaches a first predetermined cut-off voltage; performing, by at least one discharger, a second discharge at a second discharge rate, less than that used in step a), until each module passes from the first cut-off voltage to a second predetermined cut-off voltage; after the second discharge, cooling the modules for a determined cooling time until the temperature of the modules is below a threshold temperature; and after cooling , fully charging said modules at a determined charging current by means of at least one charger.

## Description

### Object of the invention

The present invention has application in the field of regeneration of electrical batteries, in particular Ni-Mh batteries as those commonly used in hybrid vehicles.

### Background of the invention

Currently, the exploitation of the planet's natural resources, and particularly of fossil fuel reserves, has forced the industry to change its course towards new sources of sustainable energy. As a result of this situation, electricity, therefore, has become one of the most recommended options in providing a source of clean, reliable energy, which alternates with, and even in some cases, completely replaces hydrocarbons as an energy source to power vehicles.

Electrical energy is stored in devices called electric batteries, which once they have been subjected to an initial charging process are able to deliver power, with which, for example, to drive a vehicle, almost entirely along a determined number of cycles.

Of the many types of electric batteries available, the use for which they are intended makes it advisable to select one or the other. For example, Li-ion batteries as used in mobile telephony, however, for the automotive industry they do not have the capacity or the safety level needed for use in cars. Hybrid cars currently run on nickel metal-hydride (Ni-Mh) batteries that drive an electric motor and can recharge themselves quickly, for example while the car is decelerating or stationary.

The problem is, at present, that when such batteries reach the end of their useful life, there is no way known in the state of the art that allows them to return to their vital circuit and, therefore, the only solution available to the user is to buy a new battery, which entails, besides the economic cost, the polluting waste (around 9% of the material is highly contaminating and non-recyclable), the environmental impact, the waste of resources in making more units than necessary, and generally poor planning leading to excess production, which, taking into account the millions of hybrid cars circulating in the world, the forecasts for growth in the sector, and that the replacement of a battery can be around every 150,000 kilometres, represents an unacceptable waste of technical and natural means.

The state of the art discloses solutions mainly aimed at replacing batteries, as is the case of patent application ES2402645 A1, but it has nothing to offer with respect to the regeneration of the replaced battery. Some solutions disclose methods of recharging or charge analysers, but they also do not address the problem of regeneration of Ni-Mh type batteries, but rather to lead-acid or Ni-Cd batteries as in the documents ES2399871A2 or ES2094347.

From that previously disclosed in the state of the art, a solution to allow regeneration of Ni-Mh batteries, such as those used in hybrid cars, is necessary.

### Description of the invention

The present invention fills a gap in the state of the art and solves the problem discussed above for the regeneration of electric Ni-Mh batteries as commonly used in hybrid vehicles through a method for the regeneration of Ni-Mh batteries with a plurality of modules. The method is characterised in that it comprises the steps of:
a) performing, by means of at least one discharger, a first discharge of each of the battery modules at a first discharge rate until each module reaches a first predetermined cut-off voltage;
b) performing, by means of at least one discharger, a second discharge, at a second discharge rate, lower than that used in step a), until each module passes from the first cut-off voltage to a second predetermined cut-off voltage;
c) after the second discharge, cooling the modules establishing a first determined rest period until the temperature of the modules is below a threshold temperature;
d) once the modules are cooled, fully charging said modules to a determined charge rate, by at least one charger.

Additionally, the invention may comprise a subsequent step to d) consisting of, once the charging is complete, cooling the modules for a second determined rest period until their temperature is below the temperature threshold.

Optionally, there is also a preliminary step that may be incorporated in some embodiments of the invention and consists of:
- fully charging the plurality of battery modules in the same way as step d);
- after charging, cooling the modules for a third determined rest period before performing the discharge of step a) so that said modules may deliver their capacity correctly; the rest period is established so that the modules are below the temperature threshold.

The invention may contemplate balancing the battery, for said balancing, the discharge of step a) is repeated and it is checked that the modules have a similar capacity without any major differences in amperage between them, 0.3 A being the maximum acceptable difference.

The temperature threshold, set to consider that the modules are in optimal conditions to continue working with them, is established, according to some embodiments of the invention, at 20 degrees Celsius.

One embodiment of the invention contemplates that the Ni-Mh battery to be regenerated specifically has a total voltage of 201 volts and 6.5 Ah capacity. As a possible configuration contemplated by the preferred embodiment, 28 elements connected in series are used, each element having six cells connected in turn in series with a voltage of 1.2V and a capacity of 6.5 Ah each. For these parameters, the discharge rate of step a), in this embodiment, is 6.5 amperes and the first cut-off voltage is set at 5.4 volts. Similarly, the second discharge rate of step b) is 0.60 amperes and the second voltage cut-off is set at 2.4 volts.

Resting periods to cool the battery modules vary depending on the process carried out, that is, depending on the charge performed, a rapid discharge or a deep discharge. According to the parameters contemplated in the preferred embodiment of the invention, the optimal temperature for working with modules is approximately 20 degrees, there being a reasonable margin of 10 degrees Celsius, so the time needed to lower the temperature to that threshold is given for rest periods of at least 24 hours, 2 hours and 48 hours for a partial charge, discharge and full charge respectively.

Another aspect of the invention relates to a computer program comprising adapted program code means to perform the method steps, when said program is run on a general purpose processor, a digital signal processor, an FPGA, an ASIC, a microprocessor, a microcontroller, or any other form of programmable hardware.

The proposed invention applies directly to Ni-Mh batteries used in electric powered vehicles, although slight modifications make it possible to adapt the parameters that have been included in the description to provide better clarity to the same and take advantage of the teachings of this document in any another situation (other vehicles such as bicycles, motorcycles, small planes, domestic appliances...) wherein Ni-Mh batteries are used, as their regeneration will include essentially the same steps. The regeneration of these batteries means in practice extending their useful life, it eliminates the expense of resources used to manufacture new replacement batteries and avoids the production of polluting waste resulting from used and unusable batteries.

### Description of the drawings

To complete the description that is going to be made and to assist a better understanding of the invention's characteristics, according to a preferred practical embodiment thereof, accompanying as an integral part of said description, is a set of drawings, where in an illustrative and non-limiting way, the following is represented:
Figure 1 shows a schematic view, according to the state of the art, of a hybrid system comprising a Ni-MH battery.
Figure 2 shows a schematic view of a Ni-Mh battery and a detail of the modules and cells of which it is made up.

### Preferred mode for carrying out the invention

For a better understanding of the invention, the following detailed description of a preferred embodiment thereof is provided.

This preferred embodiment addresses a Ni-Mh battery typically marketed in car models such as the Toyota Prius. This battery consists of 28 modules or elements, which each consist of 6 cells connected in series in their interior. The cells contain a power of 1.2 volts each and 6.5Ah capacity. Thus, each of the 28 modules that make up the battery contain 7.2 volts and 6.5 Ah capacity each one. All these modules are, in turn, connected in series with each other, forming in its complete assembly, a battery in C3 of 201.02 volts and 6.5Ah capacity (C3 means the continuous hours during which the battery is able to deliver such maximum current).

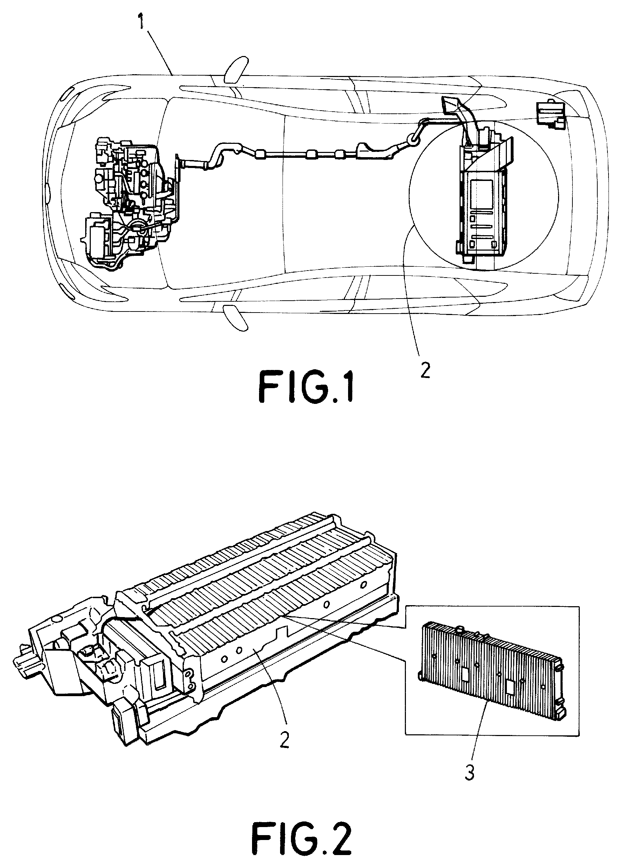

All this assembly is connected by means of high voltage cables to the vehicle so that the electric energy can be used to move the vehicle. In Figure 1 an example in which a hybrid car (1) is connected to a battery (2) as those that can address the proposed method can be seen, and, in Figure 2, is shown in greater detail the battery itself (2) such that the modules (3) that make up said battery and the cells that are contained within can be seen.

According to this preferred embodiment, although it may be omitted in other embodiments of the invention, the first step in the regeneration of an Ni-Mh battery consists of a first partial charge, wherein the battery modules are individually charged by a standard charger existing on the market, such as a IMAX B6AC charger, B6 chargers, B6Pro chargers or Onyx Duratrax 210, 220, 230, 235, 240 and 245 chargers. Depending on the number of chargers available, the charge may be performed in one or in several stages and, in other embodiments of the invention, the charge may also be performed by properly configured regeneration machines. Examples of regeneration machines used are: MAROO M-1001L regenerator, MAROO M-1005G regenerator, MAROO M-1007 regenerator, MAROO M-1009A regenerator, Zeus regenerators, Mcbat Brc-100 regenerators, Brt start, Brt golf, Brt mini, Brt medium, Brt maxi 120, Brt maxi Ups and Brt maxi Gold (battery plus) regenerators.

This first charge is preferably performed at a controlled current between 0.5 Amps and 5 Amps to achieve a correct module charge, since beyond this range the 6.5 amp modules could be charged incorrectly or be damaged. The end of the charge is marked by the automatic charger itself.

During charging of the modules, their temperature rises considerably and therefore after all modules have been charged, the battery must be left to allow its cooling before proceeding with the discharge of the next step. In the case of failure to observe the cooling period, the consequence is that the battery does not deliver its capacity correctly.

The optimum operating temperature for this preferred embodiment starts at around 20 degrees Celsius, although within a range of 10 to 30 degrees Celsius the results are also good and some embodiments of the invention work with even lower temperatures to achieve a better performance even at the expense of longer waiting periods. To reach 20 degrees Celsius in the battery before continuing with the next step in the regeneration process, consisting of a rapid discharge of the battery, a parameter of waiting periods or rest periods is established, which, in the preferred embodiment, is calculated at 24 hours for the cooling of the battery.

Once the cooling period has passed and the modules are in optimal conditions, the next step for the regeneration of the Ni-Mh battery consists of a rapid discharge of each of the modules at a determined rate, which, in the preferred embodiment of this description, is established at a rate of 6.5 amps and brings each module to a cut-off voltage, that in this example, is established at 5.40 volts. This value for the cut-off voltage is appropriate for this preferred embodiment, but both the parameters of charges and the discharges may vary slightly achieving similar results in the process, although as they deviate from those indicated other variables are sacrificed such as time, security, the duration of the battery, process reliability or even damage may be caused in the battery's interior and prevent that this later develops correct operation and not be able to develop its function as it has damaged, for example, the modules with a deeper charge than that indicated in this description.

The rapid discharge that has just been described (and the slow discharge, which is described below) is performed using standard dischargers that are sold in the market as for example a CBA 1, CBA 2, CBA 3 or CBA 4 type discharger. Connected to a computer, these dischargers allow an operator to view the discharge process by plotting graphs from which information on the status and the capacity of each module is obtained.

Similarly to the charge step explained above, a regenerating machine properly configured can adequately replace the dischargers in some embodiments of the invention.

Once the step of rapid discharge is completed, the process for the regeneration of a Ni-Mh battery passes through a second discharge step, but unlike the former, it is a slow discharge in which the parameters are varied by significantly reducing the discharge current and cut-off voltage. According to the preferred embodiment, a rate of 0.60 amps is established to discharge each module until reaching 2.40 volts as cut-off voltage. This second discharge is a deep discharge so a slow discharge with approximate values to those proposed according to the preferred embodiment is needed to preserve the modules and avoid them suffering irreparable damage to their interior.

During the slow discharge, the modules' temperature rises and it is advisable to cool them before continuing with the process and charging them again. As is explained above, the cooling is achieved by respecting a rest period, in this preferred embodiment of approximately 2 hours, which brings the temperature down to a range of between 10 and 30 degrees Celsius. Around 20 degrees is considered an optimum temperature to continue working.

Once concluded the rest period and the modules cooled, a full charge of the battery is proceeded with, in the same manner as described above. The modules are fully charged using one charger, any of those already mentioned at a controlled rate between 0.5 Amps and 5 Amps to achieve the modules' correct charge, since beyond this range the 6.5 amp modules could be charged incorrectly or be damaged. The end of the charge is marked by the automatic charger itself.

During charging of the modules, the temperature thereof rises again considerably and, therefore, once all modules have been charged, the battery must be left to rest so that cooling occurs and it can deliver its capacity properly; a time established in this preferred embodiment is of at least 48 hours. This increase in the cooling time with respect to the first charge, which was only 24 hours, is because now the modules have been charged from minimum parameters, and the rate and time used cause a considerable rise in temperature and even inflammation in the modules and hydrogen gas expulsion. Therefore, more time is needed to lower the temperature until it reaches around 20 degrees Celsius, which have been established as optimal conditions, than in the case of the first charge, where the modules did not start from a fully discharged state.

After the cooling time and the modules have recovered an optimum temperature to continue the process, an additional step is included in the preferred embodiment that ensures the quality and performance of the battery, which consists of performing a balancing of the battery. The rapid discharge discussed previously is repeated and the 28 modules that make up the battery of this example all have a similar capacity. These capacities cannot contain differences between them greater than a set value of 0.3 amps for the battery to be considered a balanced battery. If a module is detected that does not meet this requirement, it is replaced.

The battery has thus been regenerated and can be reinstalled to continue delivering its capacity and fulfil the same function as it had been doing before exhausting its useful life and having to resort to the regeneration process proposed in this invention.

## Claims

1. A method for the regeneration of a Ni-Mh battery with a plurality of modules, said method being **characterised in that** it comprises the steps of:
a) performing, by means of at least one discharger, a first discharge of each of the battery modules at a first discharge rate until each module reaches a first predetermined cut-off voltage;
b) performing, by means of at least one discharger, a second discharge, at a second discharge rate, lower than that used in step a), until each module passes from the first cut-off voltage to a second predetermined cut-off voltage;
c) after the second discharge, cooling the modules, establishing a first determined rest period, until the temperature of the modules is below a threshold temperature;
d) once the modules are cooled, fully charging said modules to a determined charge rate, by at least one charger.

2. The method, according to Claim 1, **characterised in that** it further comprises the step of:
e) once completed the charge of step d), cooling the modules for a second determined rest period until their temperature is below the temperature threshold.

3. The method, according to any one of the preceding claims, **characterised in that** it further comprises the prior steps of:
- fully charging the plurality of battery modules in the same way as step d);
- after charging, cooling the modules for a third determined rest period before performing the discharge of step a) so that said modules can lower their temperature to at least the temperature threshold.

4. The method, according to any one of the preceding claims, **characterised in that** it further comprises the balancing of the battery, for said balancing the discharge of step a) is repeated and it is verified that the modules have a similar capacity and with no great amperage differences between them, 0.3A being the maximum acceptable amperage difference.

5. The method, according to any one of the preceding claims, **characterised in that** the temperature threshold is established at 20 degrees Celsius.

6. The method, according to any one of the preceding claims, **characterised in that** the Ni-Mh battery to be regenerated has a total voltage of 201 volts and 6.5 Ah capacity.

7. The method, according to the preceding claims, **characterised in that** the first discharge rate of step a) is 6.5 amperes and the first cut-off voltage is set at 5.4 volts.

8. The method, according to the preceding claims, **characterised in that** the second discharge rate of step b) is 0.60 amperes and the second cut-off voltage is set at 2.4 volts.

9. The method, according to the preceding claims, **characterised in that** the first rest period of step c) so that the modules lower their temperature to the threshold is set at, at least, 2 hours.

10. The method, according to the preceding claims, **characterised in that** the charging current of step d) is in a range of 0.5 amperes to 5 amperes.

11. The method, according to the preceding claims, **characterised in that** the second rest period so that the modules lower their temperature below the threshold is set at, at least, 48 hours.

12. The method, according to the preceding claims, **characterised in that** the third rest period so that the modules lower their temperature below the threshold is set at, at least, 24 hours.

13. The method, according to Claim 5, **characterised in that** the capacity and the total battery voltage is achieved by 28 elements connected in series, each element having 6 cells connected in turn in series with a 1.2 V voltage and 6.5 Ah capacity each.

14. The method, according to Claim 13, **characterised in that** the battery is connected to a hybrid vehicle that can be electrically powered.

15. A computer program **characterised in that** it comprises adapted program code means to perform the steps of the method, according to any one of the Claims 1 to 14, when said program is run on a general purpose processor, a digital signal processor, an FPGA, an ASIC, a microprocessor, a microcontroller, or any other form of programmable hardware.
